# EUROPEAN PATENT SPECIFICATION

(11) **EP 3 059 535 B1**
(45) Date of publication and mention of the grant of the patent: **04.09.2019**
(21) Application number: 15156054.7
(22) Date of filing: 23.02.2015
(51) Int. Cl.: F25D 29/00

(54) **DOMESTIC REFRIGERATOR COMPRISING A CAMERA**
HAUSHALTSKÜHLSCHRANK MIT EINER KAMERA
RÉFRIGÉRATEUR DOMESTIQUE COMPRENANT UNE CAMÉRA

(43) Date of publication of application: 24.08.2016
(73) Proprietor: BSH Hausgeräte GmbH, 81739 München (DE)
(72) Inventor: Werner, Hans Peter, 89537 Giengen (DE); Wetzl, Gerhard, 89567 Sontheim (DE)

(56) References cited:
- WO-A1-2014/142118
- WO-A1-2014/142119
- JP-A- 2009 017 245
- KR-B1- 101 270 144

## Description

The invention relates to a domestic refrigerator which comprises such a camera.

Published Japanese application for patent No. 200307258 discloses a domestic refrigerator which comprises a thermally insulated housing, a storage compartment intended for storing food and/or beverages and contained within the housing, and a door leaf for closing and opening the storage compartment. The domestic refrigerator comprises two cameras each configured to take a picture of the interior of the storage compartment. Each camera comprises a camera body including an image sensor, an optical lens, and a housing. The camera body and the lens are contained within the housing.

The document WO 2014/142119 discloses a refrigerator with a camera according to the preamble of claim 1.

The object of the invention is to provide a domestic refrigerator with an improved camera.

The object of the invention is achieved by means of a domestic refrigerator according to claim 1, which among others comprises at least one camera, the camera comprising a hood- or cup-shaped one-piece housing having an open end, a carrier which comprises a first surface and a second surface and is fixed to the housing in order to close the open end, the housing and the carrier enclosing an interior space and the first surface of the carrier facing towards the interior space, and an image sensor located inside the interior space and attached to the first surface of the carrier, at least a portion of the housing opposite to the image sensor being at least semi-transparent allowing the image sensor to take pictures through this portion of the housing, and the second surface of the carrier being casted in order to seal off the housing... The domestic refrigerator comprises a thermally insulated housing, a storage compartment intended for storing food and/or beverages and contained within the housing, a door leaf for closing and opening the storage compartment, and a cooling device for cooling the storage compartment. The storage compartment is intended to store food and/or beverages.

The cooling device may in particular may be a refrigerant cycle generally known in the art. The domestic refrigerator may also comprise an electronic control device controlling the cooling device such that the storage compartment has a temperature which at least approximately equals a set-temperature.

The storage compartment may be a fresh food compartment or a freezer compartment. The domestic refrigerator may also comprise more than one storage compartment.

The domestic refrigerator may comprise a door leaf for opening and closing the storage compartment. The door leaf is, for instance, pivotally hinged with respect to the housing in particular with respect to a vertical axis.

The camera is, for instance, attached to a surface of the housing facing towards the storage compartment. The camera may attached to a surface of the door leaf facing towards the storage compartment.

The camera comprises a one-piece housing attached to a carrier. The carrier may be a printed circuit board and closes the open end of the hood- or cup-shaped one-piece housing to enclose the interior space. The image sensor is attached to the carrier and is placed within the interior space. The camera may comprise an optical lens in front of the image sensor. The optical lens is placed inside the interior space. The optical sensor may be a part of the image sensor.

The portion opposite to image sensor is at least semi-transparent, preferably transparent in order to allow the image sensor to take pictures through the housing, i.e. through the at least semi-transparent portion of the housing.

The second surface is casted utilizing, for instance, a pottant, resign or casting compound to seal off the housing and thus the interior space. Particularly, the pottant, resign or casting compound may seal off a potential gap between the housing and the carrier. More specifically, the pottant, resign or casting compound may seal off a potential gap between the carrier and the surface of the housing the carrier is touching.

For an improved sealing, the pottant, resign or casting compound may be spread over the entire second surface of the carrier.

The carrier is fixed to the housing at a predefined position.

For instance for an easier manufacturing of the camera, the carrier may be slightly clamped to the housing at the predefined position.

The one-piece housing may comprise first fixing means adapted to fix the carrier to the housing at the predefined position. The first fixing means may particularly comprise detents, allowing the camera to be assembled more easily and, thus, potentially faster.

The one-piece housing may be entirely at least semi-transparent or transparent. Alternatively, the one-piece housing may be mostly opaque and at least semi-transparent, preferably transparent at the portion opposite to the image sensor.

The shape of the portion of the one-piece housing opposite to the image sensor may be adapted to the shape of the optical lens. In particular, the portion of the one-piece housing opposite to the image sensor may be convex-shaped. This embodiment may be beneficial if the one-piece housing is covered with a camera carrier which comprises a hole matching the shape of the portion of the housing opposite to the image sensor in order to allow the image sensor to take pictures through this portion of the housing and the hole of the camera carrier. The camera carrier may be opaque.

The one-piece housing may comprise second fixing means adapted to fix the one-piece housing to a camera carrier. The second fixing means may comprise at least one indentation or groove adapted to act together with appropriate counter fixing means of the camera carrier in order to form a snap-on connection.

The camera may comprise an electric cable connected to the image sensor. The electric cable runs from the image sensor or from the carrier to the outside of the camera. Preferably, the electric cable is also casted, for instance, by the pottant, resign or casting compound.

The camera may particularly provide a capsulated camera or a capsulated compact camera module.

The camera is intended to be placed inside the domestic refrigerator. A freezer in this context is also a refrigerator. Due to the sealing, the image sensor is protected against adverse environmental conditions inside the storage compartment of the refrigerator due to, for instance, acid fog caused by vegetables and fruits stored in the domestic refrigerator.

The camera may be a camera module and comprises, for instance, the at least partial or semi-transparent housing which may be sealed by a pottant, resign or casting compound at its rear side.

The invention will be described in greater detail hereafter, by way of non-limiting examples, with reference to the embodiments shown in the drawings, wherein
- Fig. 1: is a perspective view of a domestic refrigerator,
- Fig. 2: is a cross-sectional view of a first embodiment of a camera, which does not form part of the present invention,
- Fig. 3: is a cross-sectional view of a second embodiment of a camera, and
- Fig. 4: is a cross-sectional view of the second embodiment of the camera including a camera carrier.

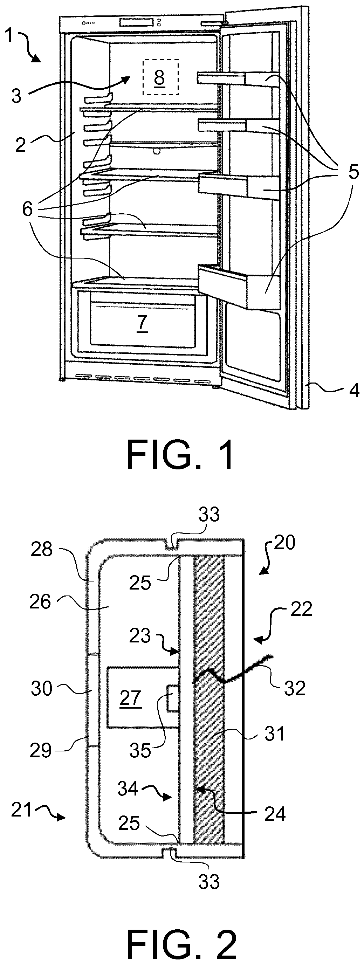

Fig.1 shows a perspective view of a domestic refrigerator 1. The domestic refrigerator 1 comprises a thermally insulated housing 2. Disposed within the housing 2 is a storage compartment 3 intended for storing foods and/or beverages.

The domestic refrigerator 1 further comprises a thermally insulated door leaf 4 for opening and closing the storage compartment 3. The door leaf 4 is pivotally hinged to the housing 2 in particular with respect to a vertical axis and in particular by means of hinges. When the door leaf 4 is open, as shown in Fig. 1, then the storage compartment 3 is accessible.

The domestic refrigerator 1 may comprise several door shelves 6 arranged on the surface of the door leaf 5 facing towards the storage compartment 3.

The domestic refrigerator 1 may comprise, as it is shown in Fig. 1, several shelves 6 disposed on top of each other within the storage compartment 3 and a drawer 7 disposed within and at the bottom of the storage compartment 3.

The domestic refrigerator 1 further comprises a cooling device, particularly a refrigerant cycle for cooling the storage compartment 3. In particular, the refrigerant cycle comprises, as it is generally known in the art, at least one compressor, at least one condenser, at least one expansion device and at least one evaporator.

The domestic refrigerator 1 comprises an electronic control device 8 which is configured to control the refrigeration cycle as it is generally known in the art. The electronic control device 8 may comprise a microcontroller or a microprocessor and controls the refrigeration cycle, in particular its compressor such that the actual temperatures of the storage compartment 3 corresponds to a set value temperature. In order to control, in particular to feedback control the compressor, the domestic refrigerator 1 may comprise at least one temperature sensor not explicitly shown in the figures, coupled to the electronic control device 8 and configured to measure the actual temperature of the storage compartment 3.

The domestic refrigerator 1 comprises at least one camera 20, 40 particularly configured to take a picture of the interior of the storage compartment 3. The camera 20, 40 is attached to a surface of the housing 2 facing towards the storage compartment 3 or to the surface of the door leaf 4 facing towards the storage compartment 3.

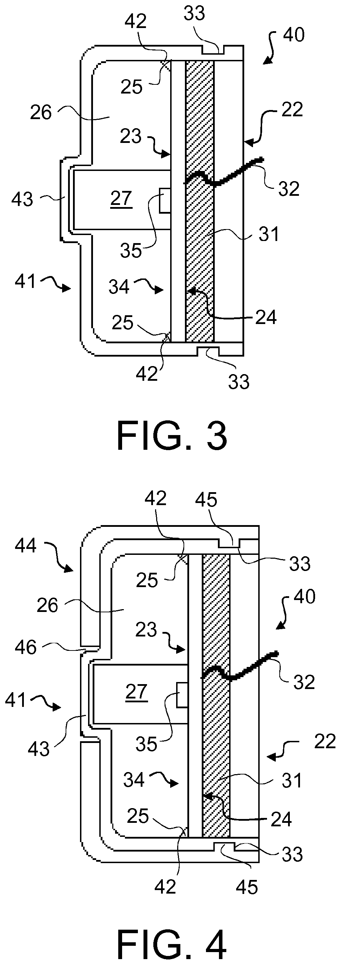

Fig. 2 shows a cross-sectional view of a first embodiment of such a camera 20 and Fig. 3 shows a cross-sectional view of a second embodiment of such a camera 40. If not explicitly mentioned thereafter, then equivalent components of the cameras 20, 40 depicted in Figures 2 and 3 are denoted by the same reference signs.

The camera 20 of Fig. 2 comprises a housing 21 which is hood- or cup-shaped. The housing 21 comprises an open end 22.

The camera 20 comprises a carrier 34 which may, for instance, be a printed circuit board. The carrier 34 comprises a first surface 23 and a second surface 24 and is attached to the housing 21 in order to close the open end 22. The carrier 34 is preferably attached to the housing at a predefined position and may be slightly clamped to the housing 21 at the predefined position 25. The housing 21 and the carrier 34 enclose an interior space 26. The first surface 23 of the carrier 34 faces towards the interior space 26 and the second surface 24 of the carrier 34 faces away from the interior space 26.

The camera 20 comprises an image sensor 35, which is attached to the first surface 23 of the carrier 34 and, thus, is located within the interior space 26. The camera 20 may further comprise an optical lens 27 which is placed in front of the image sensor 35 within the interior space 26. The optical lens 27 may be attached to the first surface 23 of the carrier 34. The optical lens 27 may be a part of the image sensor 35.

For the example embodiment shown, the housing 21 may comprise a main body 28 which comprises a hole 29 opposite to its open end 22 and opposite to the image sensor 35. The main body 28 may be opaque. The main body 28 may be made from plastics.

The housing 21 may comprise a window 30 which is inserted into the hole 29. The window 30 is transparent, at least semi-transparent in order to allow the image sensor 35 to take pictures through the window 30. The window 30 may be made from plastics.

The second surface 24 of the carrier 35 is casted in particular by means of a pottant 31, resign or casting compound in order to seal off the housing 21. Particularly, the pottant 31 seals off a potential gap between the housing 21 and the carrier 35. More specifically, the pottant 31 may seal off a potential gap between the carrier 34 and the surface of the housing 21 the carrier 34 is touching. Preferably, the pottant 31 is spread over the entire second surface 24 of the carrier 34.

The camera 20 may comprise an electric cable 32 for an electric connection of the image sensor 35. The electric cable 32 may run through the pottant 31.

The housing 21 may further comprise fixing means 33 intended to fasten the camera 20 to a camera carrier not explicitly shown in Fig. 2. The fixing means 33 may be at least one indentation or groove the surface of the housing 21 facing away form the interior space 26 may be provided with. Then the at least one indentation or groove can act together with appropriate counter fixing means of the camera carrier in order to form, for instance, a snap-on connection.

Fig. 3 shows the cross-section of the second embodiment of the camera 40, according to the present invention.

Essentially, the two cameras 20, 40 differ in their housings 21, 41. For instance, the housing 41 of the camera 40 shown in Fig. 3 may comprise detents 42 at the predefined position 25 for improved fixing the carrier 34 to the housing 41 at the predefined position 25. The detents 42 may protrude from the surface of the housing 41 facing towards the interior space 26. The carrier 34 may also be slightly clamped to the housing 41 at the predefined position 25. The housing 21 of the camera 20 of Fig. 2 may also comprise the detents 42.

Contrary to the housing 21 of the camera 20 depicted in Fig. 2, the housing 41 of the camera 40 shown in Fig. 3 is made as a one-piece housing 41 which is hood- or cup-shaped. The housing 41 may be made from plastics.

The housing 41 comprises a portion 43 which is located opposite to the open end 22 and opposite to the image lens 35. At least this portion 43 is transparent, at least semi-transparent in order to allow the image sensor 35 to take pictures through this portion 43 of the housing 41. Preferably, the entire housing 41 is transparent, at least semi-transparent.

For the example second embodiment, the shape of the portion 43 of the housing 41 located opposite to the open end 22 and the image sensor 35 may be adapted to the shape of the optical lens 27. In particular, this portion 43 of the housing 41 may be convex-shaped.

The housing 41 may also comprise the fixing means 33 intended to fasten the camera 40 to a camera carrier. Fig. 4 shows a cross-sectional view of the camera 40 and a camera carrier 44, as an example.

The fixing means 33 may be at least one indentation or groove the surface of the housing 41 facing away form the interior space 26 may be provided with. Then the at least one indentation or groove can act together with appropriate counter fixing means 45 of the camera carrier 44. The counter fixing means 45 are preferably detents in order to form a snap-on connection with the at least one indentation or groove of the housing 41.

The camera carrier 44 may designed to envelope or cover the housing 41. The camera carrier 44 may comprise a hole 46 matching the convex-shaped portion 43 of the housing 41 in order to allow the image sensor 35 to take pictures through this portion 43 of the housing 41 and the hole 46 of the camera carrier 44.

### LIST OF REFERENCE SIGNS

- 1: domestic refrigerator
- 2: housing
- 3: storage compartment
- 4: door leaf
- 5: door shelves
- 6: shelves
- 7: drawer
- 8: electronic control device
- 20: camera
- 21: housing
- 22: open end
- 23: first surface
- 24: second surface
- 25: position
- 26: interior space
- 27: optical lens
- 28: main body
- 29: hole
- 30: window
- 31: pottant
- 32: electric cable
- 33: fixing means
- 34: carrier
- 35: image sensor
- 40: camera
- 41: housing
- 42: detents
- 43: portion
- 44: camera carrier
- 45: detents
- 46: hole

## Claims

1. Domestic refrigerator, comprising a thermally insulated housing (2), a storage compartment (3) intended for storing food and/or beverages and contained within the thermally insulated housing (2), a cooling device configured to cool the storage compartment (3), and a camera (40) adapted to take at least one picture from the interior of the storage compartment (3), the camera (40) comprising
- a hood- or cup-shaped housing (41) having an open end (22),
- a carrier (34) which comprises a first surface (23) and a second surface (24) and is fixed to the housing (41) in order to close the open end (22), the housing (41) and the carrier (34) enclosing an interior space (26) and the first surface (23) of the carrier (34) facing towards the interior space (26), and
- an image sensor (35) located inside the interior space (26) and attached to the first surface (23) of the carrier (34), at least a portion (30, 43) of the housing (41) opposite to the image sensor (41) being at least semi-transparent allowing the image sensor (35) to take pictures through this portion (30, 43) of the housing (41), and the second surface (24) of the carrier (34) being casted in order to seal off the housing (41), the refrigerator being **characterized in that** the housing (41) is a one-piece housing.

2. The domestic refrigerator of claim 1, wherein the second surface (24) of the carrier (34) is casted by means of a pottant (31) which in particular is spread over the entire second surface (24) of the carrier (34).

3. The domestic refrigerator of claim 1 or 2, wherein the carrier (34) is slightly clamped to the housing (21, 41) at a predefined position (25), and/or comprises first fixing means adapted to fix the carrier (34) to the one-piece housing (41) at the predefined position (25), the first fixing means particularly comprising detents (42).

4. The domestic refrigerator of any of claims 1-3, wherein the one-piece housing (41) is entirely at least semi-transparent.

5. The domestic refrigerator of any of claims 1-4, wherein the portion (43) of the one-piece housing (41) opposite to the image sensor (35) is convex-shaped, and/or wherein the camera (40) comprises an optical lens (27) placed in front of the image sensor (35) within the interior space (26) or being a part of the image sensor (35), the shape of the portion (43) of the housing (41) opposite to the image sensor (35) being adapted to the shape of the optical lens (27).

6. The domestic refrigerator of any of claims 1-5, wherein the one-piece housing (41) comprises second fixing means (33) adapted to fix the one-piece housing (41) to a camera carrier (44), in particular the second fixing means (33) comprising at least one indentation or groove adapted to act together with appropriate counter fixing means (45) of the camera carrier (44) in order to form a snap-on connection.

7. The domestic refrigerator of claim 6, wherein the camera carrier (44) covers the housing (41) and comprises a hole (46) matching the shape of the portion (43) of the one-piece housing (41) opposite to the image sensor (35) in order to allow the image sensor (35) to take pictures through this portion (43) of the one-piece housing (41) and the hole (46) of the camera carrier (44).

## Patentansprüche

1. Haushaltskühlschrank mit einem wärmeisolierten Gehäuse (2), einem zum Lagern von Lebensmitteln und/oder Getränken vorgesehenen Lagerfach (3), das sich in dem wärmeisolierten Gehäuse (2) befindet, einer Kühlvorrichtung, die so konfiguriert ist, dass sie das Lagerfach (3) kühlt, und einer Kamera (40), die so ausgelegt ist, dass sie mindestens ein Bild vom Innenraum des Lagerfachs (3) aufnimmt, wobei die Kamera (40) Folgendes umfasst:
- ein hauben- oder tassenförmiges Gehäuse (41) mit einem offenen Ende (22),
- einen Träger (34), der eine erste Fläche (23) und eine zweite Fläche (24) umfasst und an dem Gehäuse (41) befestigt ist, damit das offene Ende (22) geschlossen ist, wobei das Gehäuse (41) und der Träger (34) einen Innenraum (26) umschließen und die erste Fläche (23) des Trägers (34) zum Innenraum (26) hin gewandt ist, und
- einen Bildsensor (35), der sich in dem Innenraum (26) befindet und an der ersten Fläche (23) des Trägers (34) angebracht ist, wobei zumindest ein dem Bildsensor (41) gegenüberliegender Abschnitt (30, 43) des Gehäuses (41) zumindest halbdurchsichtig ist, so dass der Bildsensor (35) durch diesen Abschnitt (30, 43) des Gehäuses (41) Bilder aufnehmen kann, und die zweite Fläche (24) des Trägers (34) gegossen ist, damit das Gehäuse (41) abgedichtet ist, wobei der Kühlschrank **dadurch gekennzeichnet ist, dass** es sich bei dem Gehäuse (41) um ein einstückiges Gehäuse handelt.

2. Haushaltskühlschrank nach Anspruch 1, wobei die zweite Fläche (24) des Trägers (34) mithilfe einer Vergussmasse (31) gegossen ist, die insbesondere über die gesamte zweite Fläche (24) des Trägers (34) verteilt ist.

3. Haushaltskühlschrank nach Anspruch 1 oder 2, wobei der Träger (34) an einer vorgegebenen Stelle (25) leicht an das Gehäuse (21, 41) angeklemmt ist und/oder erste Befestigungsmittel umfasst, die so ausgelegt sind, dass sie den Träger (34) an der vorgegebenen Stelle (25) an dem einstückigen Gehäuse (41) befestigen, wobei die ersten Befestigungsmittel insbesondere Arretierungen (42) umfassen.

4. Haushaltskühlschrank nach einem der Ansprüche 1 bis 3, wobei das gesamte einstückige Gehäuse (41) zumindest halbdurchsichtig ist.

5. Haushaltskühlschrank nach einem der Ansprüche 1 bis 4, wobei der dem Bildsensor (35) gegenüberliegende Abschnitt (43) des einstückigen Gehäuses (41) konvex geformt ist und/oder wobei die Kamera (40) ein Objektiv (27) umfasst, das in dem Innenraum (26) vor dem Bildsensor (35) angeordnet oder Bestandteil des Bildsensors (35) ist, wobei die Form des dem Bildsensor (35) gegenüberliegenden Abschnitts (43) des Gehäuses (41) an die Form des Objektivs (27) angepasst ist.

6. Haushaltskühlschrank nach einem der Ansprüche 1 bis 5, wobei das einstückige Gehäuse (41) zweite Befestigungsmittel (33) umfasst, die so ausgelegt sind, dass sie das einstückige Gehäuse (41) an einem Kameraträger (44) befestigen, wobei die zweiten Befestigungsmittel (33) insbesondere mindestens eine Einkerbung oder Nut umfassen, die so ausgelegt ist, dass sie derart mit entsprechenden Gegenbefestigungsmitteln (45) des Kameraträgers (44) zusammenwirkt, dass eine Schnappverbindung entsteht.

7. Haushaltskühlschrank nach Anspruch 6, wobei der Kameraträger (44) das Gehäuse (41) abdeckt und eine Öffnung (46) umfasst, die der Form des dem Bildsensor (35) gegenüberliegenden Abschnitts (43) des einstückigen Gehäuses (41) entspricht, damit der Bildsensor (35) durch diesen Abschnitt (43) des einstückigen Gehäuses (41) und die Öffnung (46) in dem Kameraträger (44) Bilder aufnehmen kann.

## Revendications

1. Réfrigérateur ménager, comprenant un logement thermiquement isolé (2), un compartiment de stockage (3) destiné à stocker des aliments et/ou des boissons et contenu dans le logement thermiquement isolé (2), un dispositif de refroidissement configuré afin de refroidir le compartiment de stockage (3) et une caméra (40) conçue afin de prendre au moins une photo de l'intérieur du compartiment de stockage (3), la caméra (40) comprenant :
- un logement en forme de capot ou de coupe (41) présentant une extrémité ouverte (22),
- un support (34) qui comprend une première surface (23) et une seconde surface (24) et est fixé au logement (41) afin de fermer l'extrémité ouverte (22), le logement (41) et le support (34) comprenant un espace intérieur (26) et la première surface (23) du support (34) étant orientée vers l'espace intérieur (26), et
- un capteur d'image (35) situé dans l'espace intérieur (26) et fixé à la première surface (23) du support (34), au moins une partie (30, 43) du logement (41) opposée au capteur d'image (41) étant au moins semi-transparente et permettant au capteur d'image (35) de prendre des photos à travers cette partie (30, 43) du logement (41), et la seconde surface (24) du support (34) étant moulée afin de sceller le logement (41), le réfrigérateur étant **caractérisé en ce que** le logement (41) est un logement d'une seule pièce.

2. Réfrigérateur ménager selon la revendication 1, dans lequel la seconde surface (24) du support (34) est moulée au moyen d'un enrobage (31) qui est en particulier étalé sur toute la seconde surface (24) du support (34).

3. Réfrigérateur ménager selon la revendication 1 ou 2, dans lequel le support (34) est légèrement fixé au logement (21, 41) dans une position prédéfinie (25) et/ou comprend de premiers systèmes de fixation conçus afin de fixer le support (34) au logement d'une seule pièce (41) dans la position prédéfinie (25), les premiers systèmes de fixation comprenant en particulier des crans (42).

4. Réfrigérateur ménager selon l'une quelconque des revendications 1 à 3, dans lequel le logement d'une seule pièce (41) est entièrement au moins semi-transparent.

5. Réfrigérateur ménager selon l'une quelconque des revendications 1 à 4, dans lequel la partie (43) du logement d'une seule pièce (41) opposée au capteur d'image (35) est de forme convexe et/ou dans lequel la caméra (40) comprend une lentille optique (27) placée devant le capteur d'image (35) dans l'espace intérieur (26) ou faisant partie du capteur d'image (35), la forme de la partie (43) du logement (41) opposée au capteur d'image (35) étant adaptée à la forme de la lentille optique (27).

6. Réfrigérateur ménager selon l'une quelconque des revendications 1 à 5, dans lequel le logement d'une seule pièce (41) comprend de seconds moyens de fixation (33) conçus afin de fixer le logement d'une seule pièce (41) à un support de caméra (44), en particulier les seconds moyens de fixation (33) comprenant au moins une indentation ou cannelure conçue afin d'agir avec des moyens de contre-fixation appropriés (45) du support de caméra (44), afin de former une connexion encliquetable.

7. Réfrigérateur ménager selon la revendication 6, dans lequel le support de caméra (44) couvre le logement (41) et comprend un trou (46) s'adaptant à la forme de la partie (43) du logement d'une seule pièce (41) opposée au capteur d'image (35), afin de permettre au capteur d'image (35) de prendre des photos à travers cette partie (43) du logement d'une seule pièce (41) et le trou (46) du support de caméra (44).
